# EUROPEAN PATENT SPECIFICATION

(11) **EP 3 753 462 B1**
(45) Date of publication and mention of the grant of the patent: **21.12.2022**
(21) Application number: 20185478.3
(22) Date of filing: 25.04.2017
(51) Int. Cl.: A47L 9/02

(54) **CLEANER HOLDER**
REINIGERHALTER
SUPPORT DE DISPOSITIF DE NETTOYAGE

(30) Priority: 09.05.2016 KR 20160056462; 25.08.2016 KR 20160108642
(43) Date of publication of application: 23.12.2020
(62) Divisional of application: 17796305.5
(73) Proprietor: LG Electronics Inc., Seoul 07336 (KR)
(72) Inventor: KIM, Namhee, Seoul 08592 (KR); NAM, Bohyun, Seoul 08592 (KR); HWANG, Jungbae, Seoul 08592 (KR); KIM, Jinju, Seoul 08592 (KR); BAE, Sehwan, Seoul 08592 (KR)
(74) Representative: Vossius & Partner Patentanwälte Rechtsanwälte mbB

(56) References cited:
- WO-A1-2015/129387
- CN-U- 205 162 974
- JP-A- 2014 124 443

## Description

### TECHNICAL FIELD

The present invention relates to a cleaner holder.

### BACKGROUND ART

A cleaner is a device that performs cleaning by sucking and wiping dust or foreign substances on a surface to be cleaned.

Such a cleaner may be classified into a manual cleaner that performs cleaning while a user directly moves the cleaner and an automatic cleaner that performs cleaning while the cleaner is driven by itself. The manual cleaner may be classified into a canister cleaner, an upright cleaner, a handheld cleaner, a stick cleaner and the like depending on types of the cleaner.

The above-described cleaner may have a rechargeable battery embedded therein, and the rechargeable battery may supply electric power for operating the cleaner only when being frequently charged. Thus, the cleaner requires a holder that may simultaneously charge the rechargeable battery and hold the cleaner.

JP 2014 124443 A relates to a vacuum cleaner including: a cleaner body where an electric suction part having a handle 102 is arranged on the upper side of an extension pipe and a nozzle part is arranged on the lower side of the extension pipe; and a stand part where a stand arm part has a barrier by which the cleaner body is prevented from moving in a horizontal direction and the centroid of the cleaner body is set to be nearly at the center of a bottom surface of a stand base part.

WO 2015/129387 A1 relates to an electric vacuum cleaner equipped with both a vertically oriented vacuum cleaner body provided with a rechargeable battery, and a charging stand configured in a manner such that the vacuum cleaner body is attachable thereto and detachable therefrom while in an upright state. The charging stand is provided with an air intake port for taking in air, a filter for cleaning the air which has been taken in, a discharge port for discharging clean air to an external space, and a fan for taking air in through the air intake port and discharging air through the discharge port. Furthermore, the discharge port is provided with a louver, and the discharge direction is oriented upward relative to the horizontal direction.

CN 205 162 974 U relates to a bracket for a hand-held vacuum cleaner, comprising: a base, a lower end connecting a strut on the base, and a bracket connected to an upper end of the strut. The bracket or the strut is provided with at least one vacuum cleaner attachment connecting mechanism, and the vacuum cleaner attachment connecting mechanism includes a slot for detachably inserting the vacuum cleaner attachment. A locking mechanism locks and unlocks the position between the vacuum cleaner attachment and the slot.

Contents of a vacuum cleaner holder are disclosed in KR 10-2012-0103956 as the prior art.

The vacuum cleaner holder according to the prior art includes a pedestal for holding a head of a vacuum cleaner to simultaneously charge and hold the vacuum cleaner and a support having charging pins for charging the vacuum cleaner.

Meanwhile, the vacuum cleaner holder according to the prior art, which holds a vacuum cleaner having a center on a lower side thereof, is inserted into support pieces on a lower side of the vacuum cleaner to support the vacuum cleaner. However, in case of a cleaner having a center on an upper side thereof, because a charging terminal should be provided on an upper side, the cleaner holder according to the prior art may not hold the cleaner.

### TECHNICAL PROBLEM

It is an object of the present invention to provide a cleaner holder that may simultaneously charge and stably hold a cleaner. This object is achieved with the features of the claims.

A cleaner holder includes: a charging stand body having a charging port configured to charge a battery of a cleaner; a support connected to the charging stand body; and a base supported on a floor and connected to the support.

The base includes: an inner base surrounding at least a portion of the support. The inner base comprises a body coupled to the support and an auxiliary base coupled to a front portion of the body. A center of gravity of the cleaner holder is located on the auxiliary base.

Embodiments of the present invention may comprise the following features: an upper cover coupled to the inner base on an upper side of the inner base and configured to support an outer peripheral surface of the support; and a lower cover coupled to the inner base on a lower side of the inner base and configured to support an inner peripheral surface of the support.

The upper cover may comprise a first neck extending upward and surrounding at least a portion of the support.

The inner base may comprise a second neck inserted into the first neck and surrounding at least a portion of the support.

An inner peripheral surface of the second neck is in surface contact with at least a portion of an outer peripheral surface of the support.

A fastening unit for coupling with the second neck is provided in the support.

The fastening unit may comprise a boss, and an elastic member by which the boss is selectively inserted/withdrawn into/from an inside of the support is connected to the boss. A coupling part into which the boss is inserted is provided in the second neck.

The lower cover may comprise a third neck inserted into a lower end of the support and being in contact with at least a portion of the inner peripheral surface of the support.

A portion of a bottom surface of the lower cover, which overlaps a vertical lower side of the third neck, is recessed upward.

A support rib surrounding the third neck and configured to support a bottom surface of the inner base is provided in the lower cover.

A coupling hole are formed in the inner base. An upper coupling member inserted into the coupling hole is provided in the upper cover and a lower coupling member inserted into the coupling hole is formed in the lower cover.

An insertion groove into which the upper coupling member is inserted is formed in the lower coupling member, and an outer peripheral surface of the upper coupling member is at least partially in contact with an inner peripheral surface of the insertion groove.

The auxiliary base is formed of metal and the body is formed of plastic material such that the center of gravity of the inner base is located on a side close to the auxiliary base.

A coupling boss inserted into the auxiliary base is provided in the body.

The coupling hole are provided in the coupling boss or the auxiliary base.

A friction part configured to maintain friction force between a bottom surface of the lower cover and a floor is provided on the bottom surface of the lower cover. The friction part includes a rubber gasket or spike.

A contact rib extending downward and being in contact with an upper surface of the inner base is provided on a bottom surface of the upper cover.

A fastening boss for coupling with the lower cover is provided in the upper cover. A fastening hole inserted into the fastening boss is provided in the lower cover.

A battery accommodating part for accommodating a battery is provided in the charging stand body, and an additional charging port is provided in the battery accommodating part.

### ADVANTAGEOUS EFFECTS

According to an embodiment of the present disclosure, a base of the cleaner holder is coupled to the support at an inside and an outside of the support such that a coupling force between the base and the support. Therefore, the base can stably support the support and the charging stand.

Further, in the cleaner holder according to the present disclosure, as the base has a support multiple support structure, the support may be stably supported, and a neck of the base is in surface contact with the support, so that the support may be minimally damaged.

Further, a center of gravity of the cleaner holder is formed to be close to the floor using an auxiliary base, so that stability of the cleaner holder may be improved.

### BRIEF DESCRIPTION OF THE DRAWINGS

FIG. 1 is a perspective view illustrating a cleaner holder according to an embodiment of the present disclosure;
FIG. 2 is a front view of the cleaner holder of FIG. 1;
FIG. 3 is a rear view of the cleaner holder of FIG. 1;
FIG. 4 is a view illustrating a state in which a cleaner is held on the cleaner holder;
FIG. 5A is a view illustrating a state in which the cleaner is coupled to a support part;
FIG. 5B is a view illustrating a state in which a locking part is coupled to the cleaner;
FIG. 6 is a view illustrating a state in which an extra battery is separated from the cleaner holder;
FIG. 7 is a view illustrating a state in which a nozzle is separated from a charging stand;
FIG. 8 is a view illustrating a state in which the charging stand is separated from the support;
FIG. 9 is a view illustrating a state in which the charging stand on which the cleaner is held is mounted on a wall surface;
FIG. 10 is a view illustrating a state in which a charging stand body is supported by a floor;
FIG. 11 is a perspective view illustrating a cleaner holder according to another embodiment of the present disclosure;
FIG. 12 is a bottom view of a base of FIG. 11;
FIG. 13 is an exploded perspective view illustrating the base of FIG. 11;
FIG. 14 is a bottom view of an upper cover of FIG. 12;
FIG. 15 is an exploded sectional view illustrating an inner base of FIG. 15; and
FIG. 16 is a sectional view illustrating the inner base.

### DETAILED DESCRIPTION OF THE EMBODIMENTS

Hereinafter, some embodiments of the present disclosure will be described in detail with reference to the accompanying drawings. It should be noted that when components in the drawings are designated by reference numerals, the same components have the same reference numerals as far as possible even though the components are illustrated in different drawings. Further, in description of embodiments of the present disclosure, when it is determined that detailed descriptions of well-known configurations or functions disturb understanding of the embodiments of the present disclosure, the detailed descriptions will be omitted.

Also, in the description of the embodiments of the present disclosure, the terms such as first, second, A, B, (a) and (b) may be used. Each of the terms is merely used to distinguish the corresponding component from other components, and does not delimit an essence, an order or a sequence of the corresponding component. It should be understood that when one component is "connected", "coupled" or "joined" to another component, the former may be directly connected or jointed to the latter or may be "connected", coupled" or "joined" to the latter with a third component interposed therebetween.

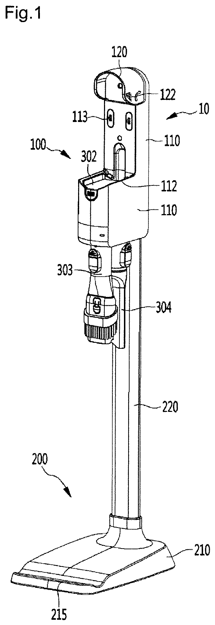

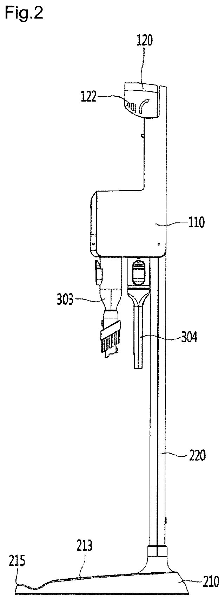

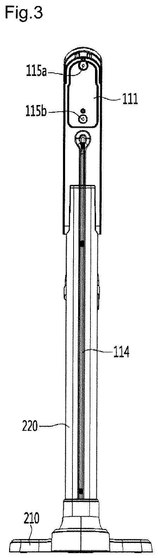

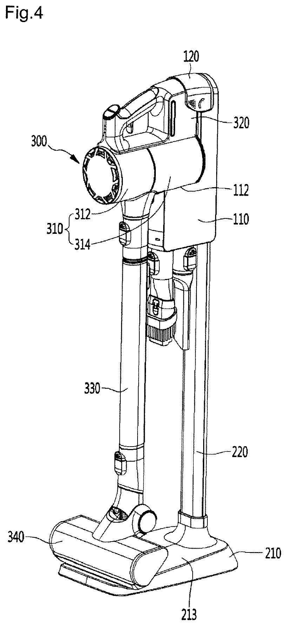

FIG. 1 is a perspective view illustrating a cleaner holder according to an embodiment of the present disclosure, FIG. 2 is a front view of the cleaner holder of FIG. 1, FIG. 3 is a rear view of the cleaner holder of FIG. 1, and FIG. 4 is a view illustrating a state in which a cleaner is held on the cleaner holder.

Referring to FIGS. 1 to 4, a cleaner holder 10 according to the embodiment of the present disclosure includes a charging stand 100 for charging a battery of the cleaner 300. The charging stand 100 may simultaneously support the cleaner 300 and charge the battery provided in the cleaner 300.

The cleaner 300 may include a cleaner body 310 having a suction motor, a battery housing 320 in which the battery is accommodated, an extension tube 330 and a suction nozzle 340. The cleaner body 310 may include a dust separator 312 for separating dust and a dust container 314 in which the dust separated by the dust separator 312 are stored. External air may be introduced by suction force generated in the cleaner body 310 through the suction nozzle 340 and the extension tube 330 and may be moved to the dust container 314 provided in the cleaner body 310. Hereinafter, detailed descriptions of the cleaner 300 will be omitted.

The charging stand 100 includes a charging stand body 110.

The charging stand body 110 includes a charging port 113. The charging port 113 may be in contact with terminals of the cleaner 300 to charge the battery provided in the cleaner 300.

An extra battery 302 may be accommodated in the charging stand body 110. Although not illustrated, the charging stand body 110 may additionally include a charging port for charging the extra battery 302.

Extra nozzles 303 and 304 may be coupled to the charging stand body 110. The nozzles 303 and 304 may be attached/detached to/from the cleaner 300 or the like. In general, a cleaner may include a plurality of replaceable suction nozzles according to usage. Thus, it is inconvenient to store the suction nozzle that is not used. However, in this way, when the suction nozzles 303 and 304 are stored while being coupled to the charging stand body 110, the risk of loss is reduced, and a user may easily use the same. The extra nozzles 303 and 304 may be named accessories.

Fixing parts 115a and 115b for fixing the charging stand 100 to a wall surface may be provided on a rear surface 111 of the charging stand body 110. Accordingly, the charging stand 110 may be fixed to the wall surface. For example, the fixing parts 115a and 115b may have a hole or groove shape. Accordingly, nails or the like, which are installed on the wall surface, are inserted into the fixing parts 115a and 115b, so that the charging stand body 110 may be fixed to the wall surface.

A support part 112 for supporting the cleaner body 310 may be provided in the charging stand body 110. The support part 112 may protrude forward. The support part 112 may support the cleaner body 310 from below.

The charging stand 100 may further include a locking part 120 provided in the charging stand body 110. The locking part 120 may be coupled to the cleaner 300 to stably fix the cleaner 300.

In detail, the locking part 120 may be coupled to the battery housing 320 to support the cleaner 300. An inner peripheral surface of the locking part 120 may have a shape corresponding to an outer peripheral surface of the battery housing 320 to surround the outer peripheral surface of the battery housing 320.

The user may selectively rotate the locking part 120 forward/rearward such that the locking part 120 may be coupled to the battery housing 320. The locking part 120 may include an anti-slide part 122 for providing friction force such that the user may easily grip the locking part 120. The anti-slide part 122 may include a plurality of bosses on an outer peripheral surface of the locking part 120.

The cleaner holder 10 may further include a stand 200 for supporting the charging stand 100.

The stand 200 may include a base 210 supported on a floor and a support 220 provided in the base 210. The support 220 may be detachably coupled to the charging stand 100.

The support 220 may extend from the base 210 in a vertical direction. The support 220 may be coupled to an electric wire 114 provided in the charging stand 100. The electric wire 114 may extend from the rear surface 111 of the charging stand body 110 to be connected to an external power source.

The base 210 may include an inclined surface 213 on which the suction nozzle 340 of the cleaner 300 is held and a stopper 215 for preventing the suction nozzle 340 of the cleaner 300 from being separated therefrom.

The stopper 215 may protrude from an end of the inclined surface 213. The stopper 215 serves to support the suction nozzle 340 such that a state in which the suction nozzle 340 is stably seated on the base 210 may be maintained.

Hereinafter, a method for coupling the cleaner 300 to the holder 10 will be described.

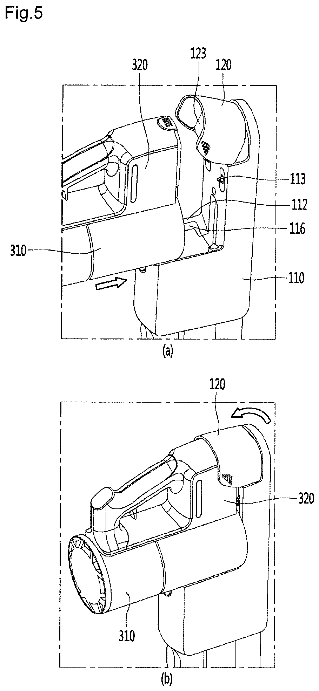

FIG. 5 is a view illustrating a state in which a cleaner is held on the cleaner holder. In detail, FIG. 5A illustrates a state in which the cleaner is coupled to a support part, and FIG. 5B illustrates a state in which the locking part is coupled to the cleaner.

Referring to FIG. 5, a guide 116 for guiding movement of the cleaner body 310 may be provided in the charging stand body 110.

The guide 116 may be provided inside the support part 112. Accordingly, the cleaner body 310 may be moved forward/rearward along the guide 116 while being supported by the support part 112. As illustrated, the cleaner body 310 is moved along the guide 116 to come into contact with the charging port 113.

The locking part 120 may be rotatably connected to the charging stand body 110 within a predetermined angle. FIG. 5A illustrates a state in which the locking part 120 is maximally rotated rearward (in a clockwise direction in FIG. 5A).

The charging stand body 110 may include an elastic member (not illustrated) for applying elastic force to the locking part 120. In a state in which the locking part 120 is rotated rearward, the elastic member (not illustrated) may apply elastic force to a rear side thereof such that a state in which the locking part 120 is rotated rearward is maintained.

The locking part 120 may include a push part 123. The push part 123 may be provided inside the locking part 120. The push part 123 may be pressed by the battery housing 320 while the cleaner body 310 is moved along the guide 116.

When the push part 123 is pressed by the battery housing 320, the locking part 120 may be operated.

In detail, when the locking part 120 is operated, the locking part 120 may be rotated forward (in a counterclockwise direction in FIG. 5B) to be coupled to the outer peripheral surface of the battery housing 320. Accordingly, the locking part 120 may cover at least a portion of the battery housing 320.

When the locking part 120 is rotated forward, the elastic member (not illustrated) may apply elastic force such that a state in which the locking part 120 is rotated forward is maintained. Accordingly, the locking part 120 may serve to fix the battery housing 320 to the charging stand body 110.

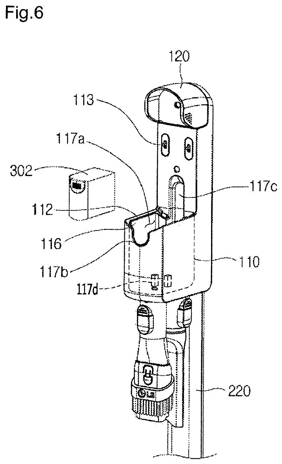

FIG. 6 is a view illustrating a state in which an extra battery is separated from the cleaner holder.

Referring to FIG. 6, the charging stand body 110 may include a battery accommodating part 117a for accommodating the extra battery 302.

The battery accommodating part 117a may be recessed rearward from one surface of the charging stand body 110. Further, the battery accommodating part 117a may be provided inside the support part 112 and the guide 116.

Although not illustrated, a charging port for charging the extra battery 302 may be provided inside the battery accommodating part 117a.

The charging stand body 110 may include grooves 117b and 117c for allowing the extra battery 302 accommodated in the battery accommodating part 117a to be easily gripped.

The grooves 117b and 117c may include a first groove 117b provided in front of the battery accommodating part 117a and a second groove 117c provided on a rear side of the battery accommodating part 117a.

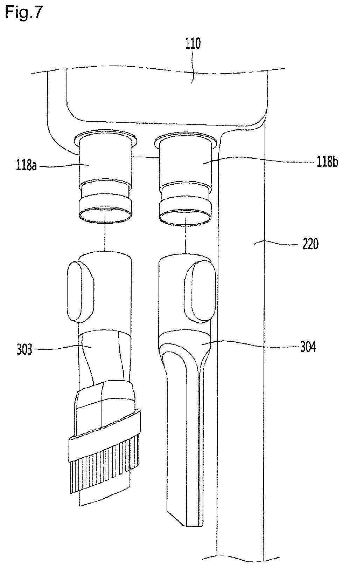

FIG. 7 is a view illustrating a state in which a nozzle is separated from a charging stand.

Referring to FIG. 7, the charging stand body 110 may include connectors 118a and 118b to which the extra nozzles 303 and 304 are selectively coupled. The connectors 118a and 118b may extend from one side of the charging stand body 110.

The user may attach/detach the nozzles 303 and 304 to the connectors 118a and 118b as needed. Accordingly, because the extra nozzles 303 and 304 are easily stored and used, user convenience may be improved.

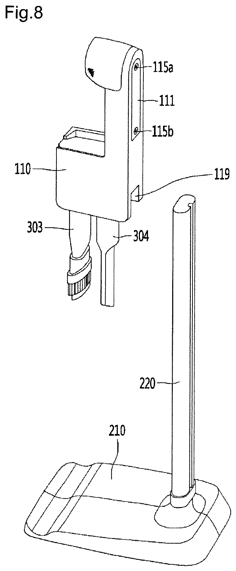

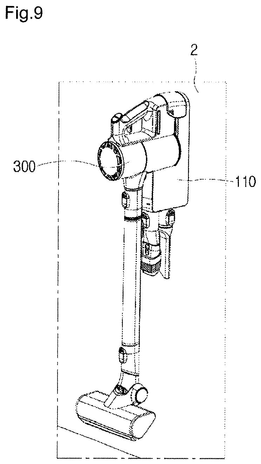

FIG. 8 is a view illustrating a state in which the charging stand is separated from the support, and FIG. 9 is a view illustrating a state in which the charging stand on which the cleaner is held is mounted on a wall surface.

Referring to FIGS. 8 and 9, the charging stand body 110 may include a coupling part 119 to which the support 220 is coupled. The support 220 may be detachably coupled to the coupling part 119. Accordingly, the user may easily separate the charging stand body 110 and the support 220 from each other.

As needed, the user may fix the charging stand body 110 from which the support 220 is separated to a wall surface 2 using the fixing parts 115a and 115b.

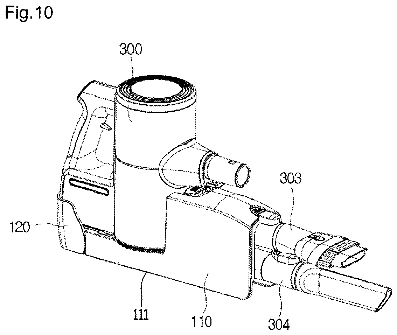

FIG. 10 is a view illustrating a state in which the charging stand body is supported by the floor.

Referring to FIG. 10, the rear surface 111 of the charging stand body 110 may be supported by the floor. To achieve this, the rear surface 111 of the charging stand body 110 may have a planar shape. In this way, because the charging stand body 110 may be held in various schemes according to a usage situation, user convenience may be improved.

Hereinafter, a cleaner holder according to another embodiment of the present disclosure will be described in detail.

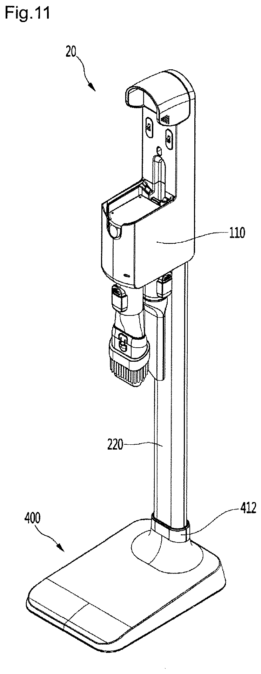

FIG. 11 is a perspective view illustrating a cleaner holder according to another embodiment of the present disclosure.

Referring to FIG. 11, the cleaner holder 20 according to another embodiment of the present disclosure includes a charging stand body 110 for charging a cleaner, a support 220 connected to the charging stand body 110 to support the charging stand body 110, and a base 400 supported by the floor and coupled to a lower portion of the support 220.

The base 400 may include a first neck 412 into which the support 220 is inserted. The first neck 412 may be formed to surround the support 220. In detail, an upper end of the first neck 412 is curved inward to surround an outer peripheral surface of a lower end of the support 220.

When compared with the cleaner holder 10, the cleaner holder 20 according to the present embodiment has a different configuration of the base 400 and substantially the same configurations of other components. Thus, the base 400 will be mainly described below.

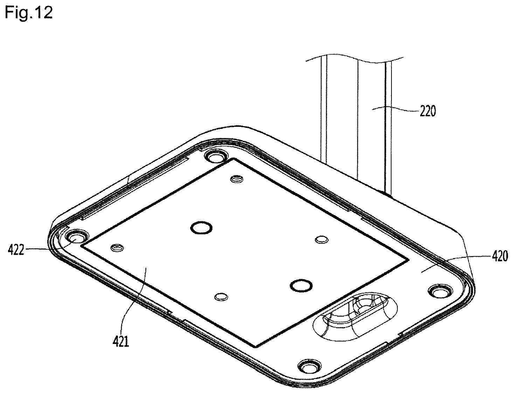

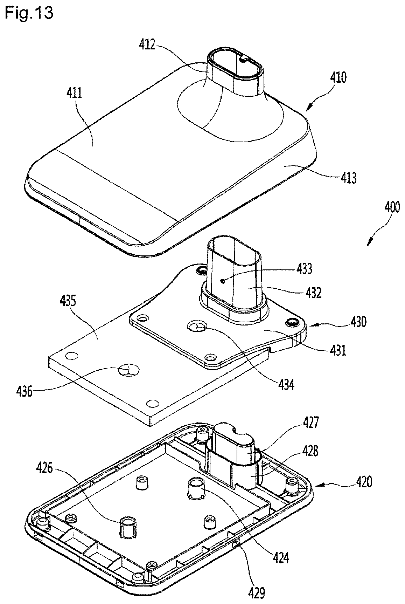

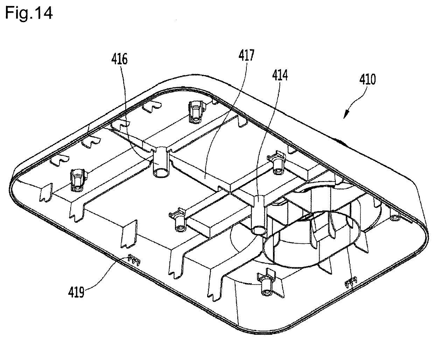

FIG. 12 is a bottom view of the base of FIG. 11, FIG. 13 is an exploded perspective view illustrating the base of FIG. 11, and FIG. 14 is a bottom view of an upper cover of FIG. 12.

Referring to FIGS. 12 to 14, the base 400 includes an upper cover 410, a lower cover 420 and an inner base 430. The lower cover 420 is provided below the upper cover 410 and the inner base 430 is provided between the upper cover 410 and the lower cover 420.

The upper cover 410 may include an upper surface 411 and a side surface 413. The upper surface 411 may define an upper surface of the base 400, and the side surface 413 may extend downward from an edge of the upper surface 411.

The upper surface 411 may be inclined downward as it goes forward from a side of the support 220. A suction nozzle 340 of a cleaner 300 supported by the charging stand body 110 may be in contact with the upper surface 411.

The first neck 412 may be provided on the upper surface 411 of the upper cover 410. The first neck 412 may protrude upward from the upper surface 411. An upper end of the first neck 412 may be formed to surround an outer peripheral surface of the support 220.

The inner base 430 is arranged below the upper cover 410. A contact rib 417 in contact with the inner base 430 may be provided below the upper cover 410. The contact rib 417 functions to maintain a distance between the upper cover 410 and the inner base 430 constantly as the contact rib 417 comes into contact with an upper surface of the inner base 430.

A bottom surface 421 of the lower cover 420 is supported by the floor and is coupled to the upper cover 410 on an upper side thereof.

A friction part 422 for maintaining predetermined friction force between the bottom surface 421 and the floor may be provided on the bottom surface 421 of the lower cover 420. The friction part 422 may include a rubber gasket or spike. When the floor is formed of a smooth material such as wood, marble and a tile, the rubber gasket may be used as the friction part 422. Further, when the cleaner holder 20 is used on a carpet, the spike may be used as the friction part 422.

The inner base 430 may include a body 431. The body 431 may be interposed between the upper cover 410 and the lower cover 420 and may be coupled to the upper cover 410 and the lower cover 420.

The body 431 may be formed of aluminum and may be manufactured in a die casting scheme. Thus, a plurality of bodies 431 may be manufactured to have the same shape.

The inner base 430 may include a second neck 432 provided in the body 431 and coupled to the support 220. The second neck 432 may extend upward from the body 431 and may surround at least a portion of a lower end of the support 220.

Meanwhile, the second neck 432 may be in surface contact with the support 220. Accordingly, an impulse transferred from the second neck 432 to the support 220 is dispersed, so that damage of the support 220 caused by friction between the support 220 and the second neck 432 may be minimized.

As the length of the second neck 432 is increased, a contact area between the second neck 432 and an outer peripheral surface of the support 220 is increased. Thus, as the length of the second neck 432 is increased within a predetermined range, stability of the support 220 may be improved. Thus, the second neck 432 may be manufactured to a minimum length for stable support of the support 220 or more.

Further, a coupling part 433 for coupling with the support 220 may be formed in the second neck 432. The coupling part 433 may include a hole.

The inner base 430 may further include an auxiliary base 435 coupled to the body 431. The auxiliary base 435 may be coupled to a front side of the body 431.

The auxiliary base 435 may be formed of a material having a larger density than other components of the cleaner holder 20, and the center of gravity of the inner base 430 may be formed on a side of the auxiliary base 435. For example, the auxiliary base 435 may be formed of metal, and the support, the body, the charging stand body, the upper cover and the lower cover may be formed of plastic.

Furthermore, the center of gravity of the base 400 may be located, by the auxiliary base 435, on a front side of a line by which the front-rear length of the base 400 is bisected. Thus, the cleaner 300 coupled to an upper side of the cleaner holder 20 may be stably supported. Because the cleaner 300 is coupled to an upper portion of the cleaner holder 20 as illustrated in FIG. 4, the center of gravity of a coupled body of the cleaner holder 20 and the cleaner 300 is biased to an upper side and a front side, and thus, stability may deteriorate. However, the center of gravity of the coupled body of the cleaner holder 20 and the cleaner 300 may be adjacent to the floor due to the auxiliary base 435, so that stability of the coupled body of the cleaner holder 20 and the cleaner 300 may be improved.

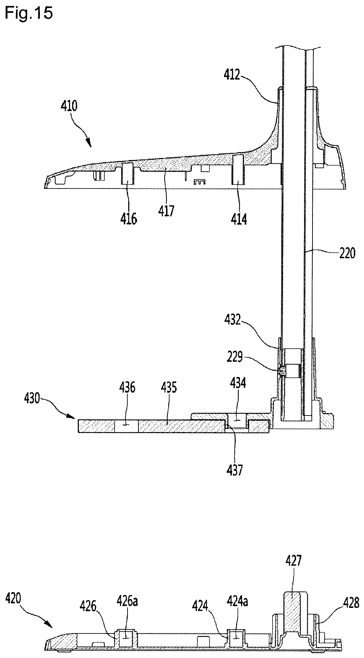

A coupling boss (see FIG. 15) inserted into the auxiliary base 435 may be provided in the body 431. The body 431 may be coupled to the auxiliary base 435 by the coupling boss 437. Unlike the drawings, the body 431 and the auxiliary base 435 may be integrally manufactured.

A plurality of coupling holes 434 and 436 for coupling with the upper cover 410 and the lower cover 420 may be formed in the auxiliary base 430. The plurality of coupling holes 434 and 436 may be formed in the body 431 or the auxiliary base 435.

The plurality of coupling holes 434 and 436 may include a first coupling hole 434 formed in the body 431 and a second coupling hole 436 formed in the auxiliary base 435. The first coupling hole 434 and the second coupling hole 436 may be plural as illustrated. For convenience of description, in the present specification, the description will be made assuming that the number of the first coupling hole 434 and the number of the second coupling hole 436 is one.

The lower cover 420 may further include a third neck 427 for coupling with the support 220. The third neck 427 may extend upward from the lower cover 420 and may be coupled to the support 220. A portion of the bottom surface of the lower cover 420, which overlaps a vertical lower side of the second neck 427, may be recessed upward.

The lower cover 420 may further include a support rib 428 supporting the inner base 430. The support rib 428 may be spaced apart from the third neck 427 by a predetermined interval and may have a shape surrounding the third neck 427. Further, an upper end of the support rib 428 may be lower than an upper end of the third neck 427.

Fastening holes 429 for coupling with the upper cover 410 may be formed in the lower cover 420. The fastening holes 429 may be formed on side surfaces of the lower cover 420. Fastening bosses 419 inserted into the fastening holes 429 may be provided in the upper cover 410.

The lower cover 420 may further include a plurality of lower coupling members 424 and 426 for coupling with the inner base 430. The plurality of lower coupling members 424 and 426 may be inserted into the first coupling hole 434 and the second coupling hole 436 provided in the inner base 430, respectively. As illustrated, although the first coupling hole 434 and the second coupling hole 436 may be arranged in one line, the present disclosure is not limited thereto.

The upper cover 410 may further include a plurality of upper coupling members 414 and 416 for coupling with the inner base 430. The plurality of upper coupling members 424 and 426 may be inserted into the first coupling hole 434 and the second coupling hole 436 provided in the inner base 430, respectively.

Hereinafter, a coupling relationship between the upper cover 410, the lower cover 420 and the inner base 430 will be described in detail.

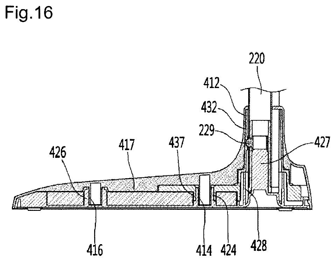

FIG. 15 is an exploded sectional view illustrating the inner base, and FIG. 16 is a sectional view illustrating the inner base.

Referring to FIGS. 15 and 16, a fastening unit 229 for coupling with the inner base 430 may be provided in the support 220. The fastening unit 229 may be inserted into the support 220 through an opening formed at a lower end of the support 220. The fastening unit 229 may include a boss inserted in the coupling part 433 (see FIG. 13) provided in the second neck 432. The elastic member provided inside the support 220 is connected to the boss of the fastening unit 229 so that the support 220 may be elastically supported. Accordingly, the boss may be selectively inserted/withdrawn into/from an inside of the support 220. Meanwhile, the fastening unit 229 may be coupled to the third neck 427 not to the support 220.

An opening inserted into the third neck 427 may be formed at a lower end of the support 220. When the third neck 427 is inserted into the opening of the support 220, an outer peripheral surface of the third neck 427 may come into contact with an inner peripheral surface of the opening of the support 220. Accordingly, the lower cover 420 may be coupled to the support 220 to support the support 220.

The support rib 428 may come into contact with the bottom surface of the inner base 430 to support the inner base 430. Further, the support rib 428 may be provided on a vertical lower side of the second neck 432. Accordingly, the support rib 428 may support loads transferred through the second neck 432.

The plurality of upper coupling members 414 and 416 may include a first upper coupling member 414 and a second upper coupling member 416. The plurality of lower coupling members 424 and 416 may include a first lower coupling member 424 and a second lower coupling member 426.

Both the first upper coupling member 414 and the first lower coupling member 424 may be inserted into the first coupling hole 434. Further, the second upper coupling member 416 and the second lower coupling member 426 may be inserted into the second coupling hole 436. Accordingly, the upper cover 410, the lower cover 420 and the inner base 430 may be firmly coupled to each other.

An outer peripheral surface of the first lower coupling member 424 may come into close contact with an inner peripheral surface of the first coupling hole 434. Accordingly, the first lower coupling member 424 may be fixed to the first coupling hole 434.

A first insertion groove 424a into which the first upper coupling member 414 is inserted may be formed in the first lower coupling member 424. An outer peripheral surface of the first upper coupling member 414 may contact or come into close contact with an inner peripheral surface of the first insertion groove 424a on at least a portion thereof. The first upper coupling member 414 is inserted into the first insertion groove 424a to be coupled to the first lower coupling member 424.

An outer peripheral surface of the second lower coupling member 426 may come into close contact with an inner peripheral surface of the second coupling hole 436. Accordingly, the second lower coupling member 426 may be fixed to the second coupling hole 436.

A second insertion groove 426a into which the second upper coupling member 416 is inserted may be formed in the second lower coupling member 426. An outer peripheral surface of the second upper coupling member 416 may contact or come into close contact with an inner peripheral surface of the second insertion groove 426a on at least a portion thereof. The second upper coupling member 416 is inserted into the second insertion groove 426a to be coupled to the second lower coupling member 426. Torsion of the inner base 430 may be prevented according to such a mechanical fastening scheme.

In this way, due to a multi-support structure in which the outer peripheral surface of the support 220 is supported by the first neck 412 and the second neck 423 and the inner peripheral surface of the support 220 is supported by the third neck 427, stability of the support 220 may be improved and a connection part of the support 220 and the base 400 may be prevented from being damaged. Accordingly, the cleaner holder 20 may stably hold the cleaner 300.

## Claims

1. A cleaner holder comprising:
a charging stand body (110) having a charging port (130) configured to charge a battery of a cleaner (300); and
a support (220) connected to the charging stand body (110);
**characterized by**:
an inner base (430) surrounding at least a portion of the support (220),
wherein the inner base (430) comprises:
a body (431) coupled to the support; and
an auxiliary base (435) coupled to a front portion of the body (431),
wherein a center of gravity of the cleaner holder (20) is located on the auxiliary base (435).

2. The cleaner holder of claim 1, wherein the auxiliary base (435) is formed of a material having a larger density than other components of the cleaner holder (20).

3. The cleaner holder of claim 2, wherein the auxiliary base (435) is formed of metal, and
wherein the charging stand body (110), the support (220) and the body (431) are formed of plastic.

4. The cleaner holder of claim 1, wherein the body (431) is formed of aluminum and is manufactured in a die casting scheme.

5. The cleaner holder of claim 1, wherein a center of gravity of the base (400) is located on a front side of a line by which the front-rear length of the base (400) is bisected.

6. The cleaner holder of claim 1, wherein the inner base (430) includes a neck (432) provided in the body (431) and coupled to the support (220).

7. The cleaner holder of claim 6, wherein the neck (432) is in surface contact with the support (220).

8. The cleaner holder of claim 6, wherein a fastening unit (229) for coupling with the neck (432) is provided in the support (220).

9. The cleaner holder of claim 8, wherein the fastening unit (229) comprises a boss, and an elastic member by which the boss is selectively inserted/withdrawn into/from an inside of the support (220) is connected to the boss, and
wherein a coupling part into which the boss is inserted is provided in the neck (432).

10. The cleaner holder of claim 1,
wherein a coupling hole (434, 436) are formed in the inner base (430), and
wherein a coupling boss inserted into the auxiliary base (435) is provided in the body (431), and
wherein the coupling hole (434, 436) is provided in the coupling boss.

11. The cleaner holder of claim 10, wherein the coupling hole is provided in the auxiliary base (435).

12. The cleaner holder of claim 1, further comprising:
an upper cover (410) coupled to the inner base (430) on an upper side of the inner base (430) and configured to support an outer peripheral surface of the support (220); and
a lower cover (420) coupled to the inner base (430) on a lower side of the inner base (430) and configured to support an inner peripheral surface of the support (220).

13. The cleaner holder of claim 12, wherein a friction part (422) configured to maintain friction force between a bottom surface of the lower cover (420) and a floor is provided on the bottom surface of the lower cover (420).

14. The cleaner holder of claim 13, wherein the friction part (422) includes a rubber gasket or spike.

15. The cleaner holder of claim 12, wherein a contact rib (417) extending downward and being in contact with an upper surface of the inner base (430) is provided on a bottom surface of the upper cover (410).

## Patentansprüche

1. Staubsaugerhalter, der aufweist:
einen Ladestationskörper (110) mit einem Ladeanschluss (113), der so konfiguriert ist,
dass er eine Batterie eines Staubsaugers (300) lädt; und
eine Stütze (220), die mit dem Ladestationskörper (110) verbunden ist;
**dadurch gekennzeichnet, dass**:
ein Innensockel (430) mindestens einen Abschnitt der Stütze (220) umgibt,
wobei der Innensockel (430) aufweist:
einen Körper (431), der mit der Stütze gekoppelt ist; und
einen Hilfssockel (435), der mit einem vorderen Abschnitt des Körpers (431) gekoppelt ist,
wobei ein Schwerpunkt des Staubsaugerhalters (20) auf dem Hilfssockel (435) angeordnet ist.

2. Staubsaugerhalter nach Anspruch 1, wobei der Hilfssockel (435) aus einem Material gebildet ist, das eine größere Dichte als die anderen Komponenten des Staubsaugerhalters (20) hat.

3. Staubsaugerhalter nach Anspruch 2, wobei der Hilfssockel (435) aus Metall gebildet ist, und
der Ladestationskörper (110), die Stütze (220) und der Körper (431) aus Kunststoffmaterial gebildet sind.

4. Staubsaugerhalter nach Anspruch 1, wobei der Körper (431) aus Aluminium besteht und in einem Druckgussverfahren hergestellt wird.

5. Staubsaugerhalter nach Anspruch 1, wobei ein Schwerpunkt des Sockels (400) an einer Vorderseite einer Linie angebracht ist, durch die die Länge von vorn nach hinten des Sockels (400) in zwei Hälften geteilt ist.

6. Staubsaugerhalter nach Anspruch 1, wobei der Innensockel (430) einen Hals (432) aufweist, der im Körper (431) vorgesehen ist und an die Stütze (220) gekoppelt ist.

7. Staubsaugerhalter nach Anspruch 6, wobei der Hals (432) in Flächenkontakt mit der Stütze (220) steht.

8. Staubsaugerhalter nach Anspruch 6, wobei eine Befestigungseinheit (229) zum Koppeln mit dem Hals (432) in der Stütze (220) vorgesehen ist.

9. Staubsaugerhalter nach Anspruch 8, wobei die Befestigungseinheit (229) einen Ansatz aufweist und ein elastisches Teil, durch das der Ansatz selektiv in das Innere der Stütze (220) eingeführt/daraus herausgezogen wird, mit dem Ansatz verbunden ist und wobei ein Koppelteil, in das der Ansatz eingeführt ist, im Hals (432) vorgesehen ist.

10. Staubsaugerhalter nach Anspruch 1,
wobei ein Koppelloch (434, 436) im Innensockel (430) gebildet ist, und
wobei ein in den Hilfssockel (435) eingeführter Koppelansatz im Körper (431) vorgesehen ist, und
wobei das Koppelloch (434, 436) in dem Koppelansatz vorgesehen ist.

11. Staubsaugerhalter nach Anspruch 10, wobei das Koppelloch im Hilfssockel (435) vorgesehen ist.

12. Staubsaugerhalter nach Anspruch 1, ferner aufweisend:
eine obere Abdeckung (410), die mit dem Innensockel (430) auf einer Oberseite des Innensockels (430) gekoppelt und so konfiguriert ist, dass sie eine Außenumfangsfläche der Stütze (220) stützt; und
eine untere Abdeckung (420), die mit dem Innensockel (430) auf einer Unterseite des Innensockels (430) gekoppelt und so konfiguriert ist, dass sie eine Innenumfangsfläche der Stütze (220) stützt.

13. Staubsaugerhalter nach Anspruch 12, wobei ein Reibungselement (422), das ausgebildet ist, eine Reibungskraft zwischen einer Unterseite der unteren Abdeckung (420) und einem Boden aufrechtzuerhalten, auf der Unterseite der unteren Abdeckung (420) vorgesehenen ist.

14. Staubsaugerhalter nach Anspruch 13, wobei das Reibungselement (422) eine Gummidichtung oder einen Gummispike aufweist.

15. Staubsaugerhalter nach Anspruch 12, wobei eine Kontaktrippe (417), die sich nach unten erstreckt und in Kontakt mit einer Oberseite des Innensockels (430) ist, an einer Unterseite der oberen Abdeckung (410) vorgesehen ist.

## Revendications

1. Support pour dispositif de nettoyage comprenant :
un corps de socle de charge (110) présentant un port de charge (113) configuré pour charger une batterie d'un dispositif de nettoyage (300) ; et
un élément de soutien (220) connecté au corps de socle de charge (110) ;
**caractérisé par** :
une base interne (430) entourant au moins une partie de l'élément de soutien (220),
dans lequel la base interne (430) comprend :
un corps (431) couplé à l'élément de soutien ; et
une base auxiliaire (435) couplée à une partie avant du corps (431),
dans lequel un centre de gravité du support pour dispositif de nettoyage (20) est localisé sur la base auxiliaire (435).

2. Support pour dispositif de nettoyage selon la revendication 1, dans lequel la base auxiliaire (435) est formée d'un matériau présentant une plus grande densité que d'autres composants du support pour dispositif de nettoyage (20).

3. Support pour dispositif de nettoyage selon la revendication 2, dans lequel la base auxiliaire (435) est formée de métal, et
dans lequel le corps de socle de charge (110), l'élément de soutien (220) et le corps (431) sont formés de plastique.

4. Support pour dispositif de nettoyage selon la revendication 1, dans lequel le corps (431) est formé d'aluminium et est fabriqué dans un schéma de coulée sous pression.

5. Support pour dispositif de nettoyage selon la revendication 1, dans lequel un centre de gravité de la base (400) est localisé sur un côté avant d'une ligne par laquelle la longueur avant-arrière de la base (400) est coupée en deux.

6. Support pour dispositif de nettoyage selon la revendication 1, dans lequel la base interne (430) comporte un col (432) prévu dans le corps (431) et couplé à l'élément de soutien (220).

7. Support pour dispositif de nettoyage selon la revendication 6, dans lequel le col (432) est en contact de surface avec l'élément de soutien (220).

8. Support pour dispositif de nettoyage selon la revendication 6, dans lequel une unité de fixation (229) à coupler avec le col (432) est prévue dans l'élément de soutien (220).

9. Support pour dispositif de nettoyage selon la revendication 8, dans lequel l'unité de fixation (229) comprend une bosse, et un élément élastique par lequel la bosse est sélectivement insérée dans/retirée d'un intérieur de l'élément de soutien (220) est connecté à la bosse, et
dans lequel une partie de couplage dans laquelle la bosse est insérée est prévue dans le col (432).

10. Support pour dispositif de nettoyage selon la revendication 1,
dans lequel un trou de couplage (434, 436) est formé dans la base interne (430), et
dans lequel une bosse de couplage insérée dans la base auxiliaire (435) est prévue dans le corps (431), et
dans lequel le trou de couplage (434, 436) est prévu dans la bosse de couplage.

11. Support pour dispositif de nettoyage selon la revendication 10, dans lequel le trou de couplage est prévu dans la base auxiliaire (435).

12. Support pour dispositif de nettoyage selon la revendication 1, comprenant en outre :
un couvercle supérieur (410) couplé à la base interne (430) sur un côté supérieur de la base interne (430) et configuré pour soutenir une surface périphérique externe de l'élément de soutien (220) ; et
un couvercle inférieur (420) couplé à la base interne (430) sur un côté inférieur de la base interne (430) et configuré pour soutenir une surface périphérique interne de l'élément de soutien (220).

13. Support pour dispositif de nettoyage selon la revendication 12, dans lequel une partie de friction (422) configurée pour maintenir une force de friction entre une surface de dessous du couvercle inférieur (420) et un plancher est prévue sur la surface de dessous du couvercle inférieur (420).

14. Support pour dispositif de nettoyage selon la revendication 13, dans lequel la partie de friction (422) comporte un joint ou une pointe en caoutchouc.

15. Support pour dispositif de nettoyage selon la revendication 12, dans lequel une nervure de contact (417) s'étendant vers le bas et étant en contact avec une surface supérieure de la base interne (430) est prévue sur une surface de dessous du couvercle supérieur (410).
